Europäisches Patentamt

European Patent Office

Office européen des brevets

(19)

(11) **EP 1 053 690 A2**

(12) **EUROPÄISCHE PATENTANMELDUNG**

(43) Veröffentlichungstag:
**22.11.2000 Patentblatt 2000/47**

(51) Int. Cl.⁷: **A23P 1/08**

(21) Anmeldenummer: **00110527.9**

(22) Anmeldetag: **17.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.05.1999 DE 29908410 U**
　　　　　　　**29.09.1999 DE 29917144 U**

(71) Anmelder:
**VK Mühlen Food Service GmbH**
**21107 Hamburg (DE)**

(72) Erfinder: **DECKWART, Siegfried**
**21629 Neu Wulmstorf (DE)**

(74) Vertreter:
**Patentanwälte**
**Hauck, Graalfs, Wehnert,**
**Döring, Siemons**
**Neuer Wall 41**
**20354 Hamburg (DE)**

(54) **Mit Teig beschichtetes, frittiertes Produkt und Verfahren zu seiner Herstellung**

(57)　Verzehrbares Produkt, enthaltend einen Kern aus Fleisch, Wurst, Käse, Gemüse oder Kombinationen von diesen, eine auf dem Kern aufgebrachte Klebstoffmischung, die wasser- und viskoseregulierend wirkt und einen Teigmantel um den Kern mit der Klebstoffmischung, wobei das fertige Vorprodukt frittiert ist zur Bildung eines krossen Teigmantels.

**EP 1 053 690 A2**

**Beschreibung**

Die Erfindung bezieht sich auf ein verzehrbares Produkt, insbesondere mit einem frittierten Teigmantel nach dem Patentanspruch 1.

Für viele verzehrbare Produkte ist bereits bekannt, diese zu panieren und anschließend zu frittieren. Es ist auch bekannt, Nusskerne o.Ä. mit einem Teigmantel zu versehen.

Der Erfindung liegt die Aufgabe zugrunde, die Palette derartiger verzehrbarer Produkte, insbesondere in Form von Snacks, durch ein weiteres Produkt zu ergänzen.

Diese Aufgabe wird durch die Merkmale des Patentanspruchs 1 gelöst.

Das erfindungsgemäße verzehrbare Produkt, insbesondere Snack, enthält einen Kern aus Fleisch, Wurst, Käse, Gemüse oder Kombinationen von diesen Bestandteilen. Es können für die Kerne ganze Fleischstücke aus Schweine-, Rind- und Hühnerfleisch vorgesehen werden oder sogenanntes Formfleisch dieser Fleischsorten. Es können auch Wurststücke verwendet werden, beispielsweise aus Salami. Alternativ können auch Hackfleischbällchen vorgesehen werden. Als Gemüse kann z.B. Sellerie, Rote Beete, Karotten oder dergleichen in Frage kommen oder Kombinationen aus diesen Gemüsen, welche zu einem Kern gepresst werden. Der Kern hat eine gewünschte geometrische Form, beispielsweise als Kugel, Würfel oder Eiform, je nach dem gewünschten Endprodukt. Seine Größe bewegt sich vorzugsweise zwischen 5 und 20 mm.

Auf den beschriebenen Kern wird eine Klebstoffmischung aufgebracht. Sie soll dazu dienen, eine innige Verbindung zwischen einer Umhüllung aus Teig und dem Kern herzustellen. Erfindungswesentlich ist dabei, dass die Klebstoffmischung viskositäts- und wasserregulierende Eigenschaften aufweist. So muss der Klebstoff in der Lage sein, trotz des relativ hohen Wassergehalts von Fleisch oder Wurst oder auch Gemüse eine klebende Verbindung herbeizuführen. Der Klebstoff weist daher wasseraufnehmende Eigenschaften auf Außerdem entwickelt er bei Zufuhr von Wasser eine Viskositätserhöhung, wodurch die haftende Eigenschaft verbessert wird. Für den Klebstoff kann nach einer Ausgestaltung der Erfindung Stärke, Gummi, Eiweiß, Zellulose, Extruderprodukte oder Kombinationen dieser Stoffe verwendet werden. Vorzugsweise wird eine Mischung aus Spezialstärke aus Kartoffeln und einer extrudierten Weizenmehlfraktion verwendet.

Der Kern wird dragiert, und zwar mit Teig. Der Teigmantel hat vorzugsweise eine Dicke zwischen 1 und 5 mm. Er wird anschließend frittiert und ggf. gewürzt. Der Teigmischung bzw. dem Kern können auch sogenannte Functional Food-Zutaten zugesetzt werden, etwa Omega-3-Fettsäuren, präbiotische Ballaststoffe, Multivitaminzusätze, Milchcalcium oder auch aromatisierende Bestandteile.

Bei der Verwendung von Fleisch oder Wurst für das erfindungsgemäße Produkt enthält die Trockenmischung für die Teigummantelung folgende Bestandteile: Palmfettpulver, Salz, vorverkleisterte Maisstärke, Zucker, Eiweiß tierischer Herkunft und eine extrudierte Weizen- oder Maismehlfraktion. Nach einer weiteren Ausgestaltung der Erfindung kann diese Mischung in folgender Zusammensetzung vorgesehen werden:

0,5 bis 2,5 % Natriumbicarbonat
1,0 bis 25 % Palmfettpulver 36/38
1,0 bis 3 % Salz
1,0 bis 15 % Zucker
1,0 bis 10 % Eiweiß tierischer Herkunft
0 bis 20 % extrudierte Weizenmehlfraktion
Rest auf 100 % vorverkleistere Maisstärke.

Die Angaben sind in Gew.-%, wie auch die übrigen im Nachfolgenden in % angegebenen Anteile.

Für gepresste Kerne aus Gemüse kann eine Umhüllungsmischung folgende Bestandteile aufweisen: Lecithinfraktionen/tierisches Eiweiß, Natriumbicarbonat, Vitaminmischung, Zitronen-Sauerteig, Sojamehl Spezial enzymhaltig, Fettpulver, Salz und Mineralstoffe, Zucker, extrudiertes Reismehl und extrudierte Weizenmehlfraktion. Bezüglich ihrer Anteile sieht eine Ausgestaltung der Erfindung folgende Zusammensetzung vor:

0,1 bis 10 % Lecithinfraktion/tierisches Eiweiß
0,5 bis 2,5 % Natriumbicarbonat
0,5 bis 5 % Vitaminmischung
0,5 bis 2,5 % Zitronen-Sauerteig
1,0 bis 10 % enzymhaltiges Sojamehl Spezial
1,0 bis 20 % Fettpulver 44/46
1,0 bis 5 % Salz und Mineralstoffe
1,0 bis 10 % Zucker
5 bis 20 % extrudiertes Reismehl

Rest auf 100 % extrudierte Weizenmehlfraktion.

Das Verfahren zur Herstellung des erfindungsgemäßen Produkts umfasst folgende Schritte:

- Eine Menge Kerne wird in eine Dragiertrommel eingebracht
- Eine Klebstofflösung wird bei laufender Dragiertrommel auf die Kerne aufgebracht, vorzugsweise gesprüht
- In die laufende Dragiertrommel werden die Pulvermischung für den Teigmantel und Wasser eingegeben
- Die dragierten Produkte werden anschließend einem Frittier- und Würzvorgang unterworfen.

Die Misch- und Dragierzeit beträgt nach einer Ausgestaltung der Erfindung 10 bis 30 Minuten, vorzugsweise etwa 30 Minuten. Das Verhältnis der Menge Wasser in der Klebstofflösung und der mit der Pulvermischung eingegebenen Menge Wasser beträgt etwa 1:2,2.

Nachstehend ein Beispiel für eine Klebstoffmischung:

| Spezialstärke aus Kartoffeln | 70 % |
|---|---|
| Weizenmehlfraktionen | <u>30 %</u> |
| | 100 %. |

Die Gesamtcharge kann sich wie folgt zusammensetzen:

| Pulvermischung in trockener Form für den Teigmantel, etwa in obiger Zusammensetzung | 100 kg |
|---|---|
| Pulvermischung für den Klebstoff | 2 kg |
| Fleischstücke | 100 kg |
| Wasser | 40 kg |
| | <u>242 kg.</u> |

Wie schon erwähnt, beträgt das Verhältnis der Wassermengen 1:2,2 bezüglich der ersten Menge, die mit der Klebstofflösung eingegeben wird, und der zweiten Menge, die mit der Pulvermischung für den Teigmantel eingegeben wird.

Nachstehend ein Beispiel für eine Pulvermischung für den Teigmantel für Fleisch und den Klebstoff:

Beispiel 1:

| Pulvermischung 1: | Umhüllungsmischung | |
| --- | --- | --- |
| | Palmfettpulver 36/38 | 6,5 % |
| | Salz | 2,5 % |
| | vorverkleistere Maisstärke | 71,0 % |
| | Zucker | 10,0 % |
| | Eiweiß, tierischer Herkunft | 4,0 % |
| | extrudierte Weizenmehlfraktionen | 6,0 % |
| | | 100,0 % |

| Pulvermischung 2: | Klebstoffmischung | |
| --- | --- | --- |
| | Spezialstärke aus Kartoffel | 70,0 % |
| | extrudierte Weizenmehlfraktionen | 30,0 % |
| | | 100,0 % |

Nachfolgend ein weiteres Beispiel für eine Pulvermischung für den Teigmantel für einen Kern aus gepresstem Gemüse:

| | |
| --- | --- |
| Lecithinfraktionen/tierisches Eiweiß | 7,0 % |
| Natriumbicarbonat | 2,0 % |
| Vitaminmischung | 1,0 % |
| Zitronen-Sauerteig | 1,5 % |
| Sojamehl Spezial enzymhaltig | 3,5 % |
| Fettpulver 44/46 | 5,0 % |
| Salz + Mineralstoffe | 2,5 % |
| Zucker | 8,0 % |
| Reismehl extrudiert | 15,0 % |
| extrudierte Weizenmehlfraktion | 55,0 % |
| | 100,0 % |

Wie schon erwähnt, wird anschließend an den Dragiervorgang eine Frittierung vorgenommen, bis eine gewünschte hellbraune Farbe und die gewünschte Krossheit erzielt sind. Danach kann das Produkt mit würzenden Zutaten gepudert oder bestäubt werden.

**Patentansprüche**

1. Verzehrbares Produkt, enthaltend einen Kern aus Fleisch, Wurst, Käse, Gemüse oder Kombinationen von diesen, eine auf dem Kern aufgebrachte Klebstoffmischung, die wasser- und viskoseregulierend wirkt und einen Teigmantel um den Kern mit der Klebstoffmischung, wobei das fertige Vorprodukt frittiert ist zur Bildung eines krossen Teigmantels.

2. Verzehrbares Produkt nach Anspruch 1, dadurch gekennzeichnet, dass geformtes Fleisch oder Hackfleischbällchen vorgesehen sind.

3. Verzehrbares Produkt nach Anspruch 1, dadurch gekennzeichnet, dass als Wurst Salami vorgesehen ist.

4. Verzehrbares Produkt nach einem der Ansprüche 1 bis 3, dadurch gekennzeichnet, dass die Klebstoffmischung Stärke, Gummi, Eiweiß, Zellulose, Extruderprodukte oder Kombinationen der genannten Stoffe enthält.

5. Verzehrbares Produkt nach Anspruch 4, dadurch gekennzeichnet, dass die Klebstoffmischung Spezialstärke aus Kartoffeln und eine extrudierte Weizenmehlfraktion enthält.

6. Verzehrbares Produkt nach Anspruch 5, dadurch gekennzeichnet, dass das Verhältnis von Stärke zu Weizenmehlfraktion etwa 70:30 beträgt.

7. Verzehrbares Produkt nach einem der Ansprüche 1 bis 6, dadurch gekennzeichnet, dass die Trockenmischung für den Teigmantel für die Verwendung eines Kerns aus Fleisch folgende Bestandteile aufweist: Palmfettpulver 36/38, Salz, vorverkleisterte Maisstärke, Zucker, Eiweiß tierischer Herkunft und extrudierte Weizenmehlfraktionen, Natriumbicarbonat.

8. Verzehrbares Produkt nach Anspruch 7, dadurch gekennzeichnet, dass die Trockenmischung in folgender Zusammensetzung vorgesehen ist:

   0,5 bis 2,5 % Natriumbicarbonat
   1,0 bis 25 % Palmfettpulver 36/38
   1,0 bis 3 % Salz
   1,0 bis 15 % Zucker
   1,0 bis 10 % Eiweiß tierischer Herkunft
   0 bis 20 % extrudierte Weizenmehlfraktionen
   Rest auf 100 % vorverkleistere Maisstärke.

9. Verzehrbares Produkt nach Anspruch 8, dadurch gekennzeichnet, dass die Trockenmischung für den Teigmantel in folgender Zusammensetzung vorgesehen ist:

   0,5 bis 2,5 % Natriumbicabonat
   6,5 % Palmfettpulver 36/38
   2,5 % Salz
   71,0 % vorverikleistere Maisstärke
   10,0 % Zucker
   4,0 % Eiweiß, tierischer Herkunft
   6,0 % extrudierte Weizenmehlfraktionen.

10. Verzehrbares Produkt nach einem der Ansprüche 1 bis 6, dadurch gekennzeichnet, dass die Trockenmischung für einen Kern aus gepresstem Gemüse folgende Zusammensetzung aufweist: Lecithinfraktionen/tierisches Eiweiß, Natriumbicarbonat, Vitaminmischung, Zitronen-Sauerteig, Sojamehl Spezial enzymhaltig, Fettpulver 44/46, Salz und Mineralstoffe, Zucker, Reismehl extrudien und extrudierte Weizenmehlfraktion.

11. Verzehrbares Produkt nach Anspruch 10, dadurch gekennzeichnet, dass die Pulvermischung folgende Zusammensetzung aufweist:

   1,0 bis 10 % Lecithinfraktionen/tierisches Eiweiß
   0,5 bis 2,5 % Natriumbicarbonat

0,5 bis 5 % Vitaminmischung

0,5 bis 2,5 % Zitronen-Sauerteig
1,0 bis 10 % Sojamehl Spezial enzymhaltig
1,0 bis 20 % Fettpulver 44/46
1,0 bis 5 % Salz + Mineralstoffe
1,0 bis 10 % Zucker
5,0 bis 20 % Reismehl extrudiert
Rest auf 100 % extrudierte Weizenmehlfraktion.

12. Verzehrbares Produkt nach Anspruch 11, dadurch gekennzeichnet, dass die Trockenmischung folgende Zusammensetzung aufweist:

7,0 % Lecithinfraktionen/tierisches Eiweiß
2,0 % Natriumbicarbonat
1,0 % Vitaminmischung
1,5 % Zitronen-Sauerteig
2,5 % Sojamehl Spezial enzymhaltig
5,0 % Fettpulver 44/46
2,5 % Salz + Mineralstoffe
8,0 % Zucker
15,0 % Reismehl extrudiert
55,0 % extrudierte Weizenmehlfraktion.

13. Verzehrbares Produkt nach einem der Ansprüche 1 bis 12, dadurch gekennzeichnet, dass das Verhältnis von Trockenmischung für den Teigmantel und für die Klebstoffmischung etwa 100:1-3, vorzugsweise 2 beträgt.

14. Verzehrbares Produkt nach einem der Ansprüche 1 bis 13, dadurch gekennzeichnet, dass die Dicke des Teigmantels zwischen 1 und 5 mm beträgt.

15. Verzehrbares Produkt nach einem der Ansprüche 1 bis 14, dadurch gekennzeichnet, dass der Durchmesser des Kerns zwischen 5 und 20 mm beträgt.

16. Verfahren zur Herstellung des verzehrbaren Produktes nach einem der Ansprüche 1 bis 15 mit den folgenden Schritten:

- eine Menge Kerne wird in eine Dragiertrommel eingebracht
- eine Klebstofflösung wird bei laufender Dragiertrommel auf die Kerne aufgebracht, vorzugsweise gesprüht oder genetzt
- in die laufende Dragiertrommel werden die Pulvermischung für den Teigmantel und Wasser eingegeben
- die dragierten Produkte werden anschließend einem Frittier- und Würzvorgang unterworfen.

17. Verfahren nach Anspruch 16, dadurch gekennzeichnet, dass die Misch- und Dragierzeit zwischen 10 und 30 Minuten beträgt, vorzugsweise etwa 30 Minuten.

18. Verfahren nach Anspruch 16 oder 17, dadurch gekennzeichnet, dass das Verhältnis der Menge Wasser in der Klebstofflösung und der der Pulvermischung zugesetzten Wassermenge etwa 1:2,2 beträgt.